# EUROPEAN PATENT APPLICATION

(11) **EP 2 863 058 A1**
(43) Date of publication of application: **22.04.2015**
(21) Application number: 14188969.1
(22) Date of filing: 15.10.2014
(51) Int. Cl.: F04B 39/00, F04B 53/00

(54) **Tuned vibration neutralizer device**

(30) Priority: 15.10.2013 BR 102013026542
(71) Applicant: Whirlpool S.A., 04578-000 São Paulo - SP (BR)
(72) Inventor: Dos Santos, Christian, 89222-460 Joinville (BR); Salome, Marcelo Miguel, 89221-100 Joinville (BR)
(74) Representative: Soldatini, Andrea

(57) **Abstract**

The present invention relates to a vibration neutralizer designed, more specifically, for use in refrigeration compressors, especially aimed at reducing noises and vibrations derived from the operation of the compressor motor used in the refrigeration equipment. It basically comprises at least one rod (2) cooperating with the compressor (1), wherein said physical rod comprises at least one fastening means (21) and at least one shaft (22) cooperating with at least one fastening means(21); and at least one body (3) cooperating with the at least one rod (2), wherein the at least one body (3) comprises an elastomeric material (31) coated with at least a layer (32) of metallic material.

## Description

### Field of the Invention

The present invention relates to a vibration neutralizer designed, more specifically, for use in refrigeration compressors, especially aimed at reducing noises and vibrations derived from the operation of the compressor motor used in the refrigeration equipment

### Background of the Invention

As is known in the art, conventional refrigeration systems typically operate with compressors consisting basically of rotors (rotating parts) and stators (fixed parts), which are responsible for raising the pressure of the fluids involved. For this purpose, such equipment are provided with suction and discharge pipelines, and are interconnected to condensers and evaporators in a closed circuit through which the refrigeration fluid circulates.

However, the operation of the compression systems may present problems of excessive vibration resulting from the coincidence of the natural frequency of the machine components with the inherent frequency of the operation thereof, which generates high noise levels. When this situation occurs, commonly known and used isolation techniques are not sufficient to reduce noise levels, that is why it is common to use noise dampers designed for attenuating preset specific frequencies that, as a rule, correspond to the fundamental frequencies inherent to the systems operation - as it is performed, for example, in industrial equipment in general and in automotive systems.

Referring specifically to compressors used in the refrigeration systems, grommets installed under the support means, which fastens the equipment to the appliance cabinet, are normally used for this purpose; but it is noticed that only the use of such elements is not sufficient to promote a significant reduction in the response of the compressor structure itself, since the vibrations continue to be transmitted to it during operation. This solution uses a vibration damper coupled simultaneously to the lower region of the compressor and to the refrigerator cabinet, similar to that described, for example, in the document CN2660437. It should be noted, however, that these solutions are effective only for specific frequencies, and therefore its effectiveness is limited.

Another alternative, also designed for the application in the compressor base, more particularly, on its mounting means, was described in document KR100850593 in which it is disclosed the use of vibration-absorbing elements containing masses at their ends. This solution has complex construction and assembly characteristics, and it is further intended for linear compressors - and not for refrigeration compressors, as the proposal of the present invention.

Another solution has been proposed in document JP2305385, which envisages the existence of vibration restraining device located in the upper outer surface of the refrigeration compressor housing, such a device being comprised by a damper operated by a controller, i.e., it suggests an active control for adjusting the dampening frequency. Therefore, it is a complex solution, and presents high cost of production and installation; it's not very versatile since it could not be easily installed in any type of compressor - including those previously manufactured.

The vibration and noise reduction systems described in documents US2006/0292023 and JP2010/007881 benefit from the concept that the natural frequency of the objects is directly related to the fact that the mass increase is able to reduce this frequency; therefore, they use dampening masses directly and rigidly fixed to the compressor housing. However, these solutions also turn out to present effectiveness only for specific frequencies, therefore they are limited.

The matter disclosed in US2005/0186092 also takes into account the fact that the mass increase changes the frequency of body vibration and describes a vibration damper formed by a mass attached to the end of an elastic body (usually in the form of a spring) which, in turn, attaches to the upper part of the compressor. Thus, it reveals a vibration damper means consisted of two independent elements, one of which (spring) having one end rigidly fixed to the compressor housing. Thus, this solution also does not appear very versatile since it does not allow the operating frequency adjustment according to the operating condition of the compressor. Document PI1105057-8 also describes a vibration absorbing device based on a mass-spring-damper system to reduce the forced response of the motor at a given range of fixed excitation frequency, wherein the absorption of the motor chattering energy varies according to its natural frequency, and the factors that influence the natural frequency of said absorber are: length, width, thickness, material, shape and how it fits on the motor. Also in this case, however, if the motor starts vibrating at a frequency different from that for which the absorber was constructed, the noise absorption capacity will be impaired.

It is clear, therefore, that the current state of the art lacks of practical and versatile solutions to provide a dynamic vibration neutralization, which are also subject to installation and usage in compressors that are already in use and, moreover, are subject to adjustment in the vibration tuning to be attenuated, according to the operating conditions of the compressor, compared to the critical frequencies of noise emission and vibration.

### Objectives of the invention

Therefore, it is an objective of the present invention to provide a tuned vibration neutralizer device, with practical and simple construction and installation, which does not show significant impact on the final cost of the compressors used mainly in refrigeration systems.

Additionally, it is amongst other objectives of the present invention to provide a vibration neutralizer device that automatically and dynamically operates according to the operating conditions of the compressor.

It is also an objective of the invention to provide a vibration neutralizer whose activities also take advantage of the fact that the change in stiffness - and not only in the mass - of the system also changes the frequency of bodies vibration, and, consequently, the conditions to damper the vibrations and noises coming there from. Thus, one or more degrees of freedom are added to the system, in this case to the compressor, significantly alter the vibration amplitude and noise emissions from the original system. This reduction is due to the fact that one or more degrees of freedom added to the system absorb vibration energy which was previously spent by the original system.

Hence, it is also one of the objectives of the invention to disclose a vibration neutralizer device that operates as a dual mass-spring system, thereby greatly expanding the capability of determining the frequency range in which it can act appropriately.

Moreover, one objective of the invention is to provide a vibration neutralizer device that can be installed, in a simply manner, in compressors that are already in use, in order to comprise a device which does not associate its assembly, installation and coupling with the production process of the compression equipment.

### Summary of the Invention

The abovementioned objectives are achieved through a dynamic vibration neutralizer device, specifically designed for use in compressors for refrigeration systems, wherein the operation of said device is based on mass-spring system of vibration neutralization.

In a preferred embodiment of the invention, said dynamic vibration neutralizer device comprises:
- at least one rod cooperating with the compressor, wherein said rod comprises at least one fastening means and at least one shaft cooperating with at least one fastening means;
- at least one body cooperating with the at least one rod, wherein the at least one body comprises an elastomeric material having stiffness and damping properties present in three orthogonal axes (x; y and z), coated with at least one rigid layer;
   wherein the tuned vibration neutralizer device comprises means to function as a dual mass-spring system, since the rigid layer functions as a mass-spring system with respect to the elastomeric material and the at least one body comprising a rigid layer, and the elastomeric material functions as a mass-spring system in relation to the rod and, hence, the compressor.

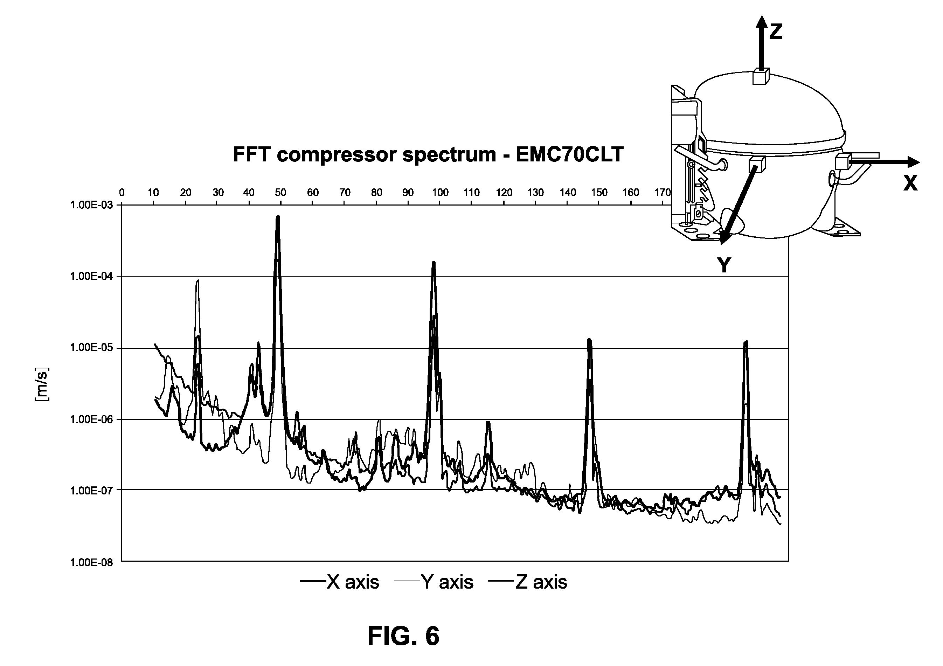

Importantly, the elastomeric material added to the neutralizer is responsible for the alteration of static and dynamic stiffness of the neutralizer system. This component is designed in order to operate in three principal orthogonal axes, i.e., x, y and z, with vertical actuation in the y-axis and radial actuation in x and z axes, as shown in Figure 6.

In the preferred embodiment of the invention, said rigid layer comprises a material having higher stiffness than that of the elastomeric material, wherein the rigid layer is preferably made of metallic material.

It is also preferred that the mass of the at least one rigid layer comprises from 2 to 20% of the mass of the compressor and, in a more specific and punctual manner, from 5 to 10% by weight of the mass of the compressor.

Also according to a preferred embodiment of the present invention, the at least one physical rod cooperates with the upper central surface of the compressor.

It is also important to highlight that at least one fastening means performs the adjustment of the rod operation time as well as the operating frequency adjustment of the tuned vibration neutralizer device.

Preferably, the dynamic vibration neutralizer device, object of the present invention, cooperates with the upper central surface of the compressor and is intended to reduce the characteristic vibration amplitude of the compressor at the frequency of 50/60 Hz and harmonics thereof.

### Brief Description of the Drawings

The invention will be described in detail based on the accompanying drawings, in which:
Figure 1 shows a view of the tuned vibration neutralizer device according to a preferred embodiment of the present invention in exploded perspective, that is, with its parts taken separately for a better understanding of its constituent elements;
Figure 2 shows the assembled device of Figure 1 in top perspective;
Figure 3 shows the assembled device of Figure 1 in bottom view;
Figure 4 shows the device of Figure 1 properly installed in a compressor that is arranged in one refrigeration equipment;
Figure 5 shows a graph that allows to visualize the noise levels as a function of frequency in third octave bands without the device of the present invention, showing the results obtained on the operating and bench test in a refrigeration equipment;
Figure 6 shows a graph that illustrates the vibrations amplitudes during the operation of the compressor, which allows to visualize the frequency peaks occurring during the operation of the compressor;

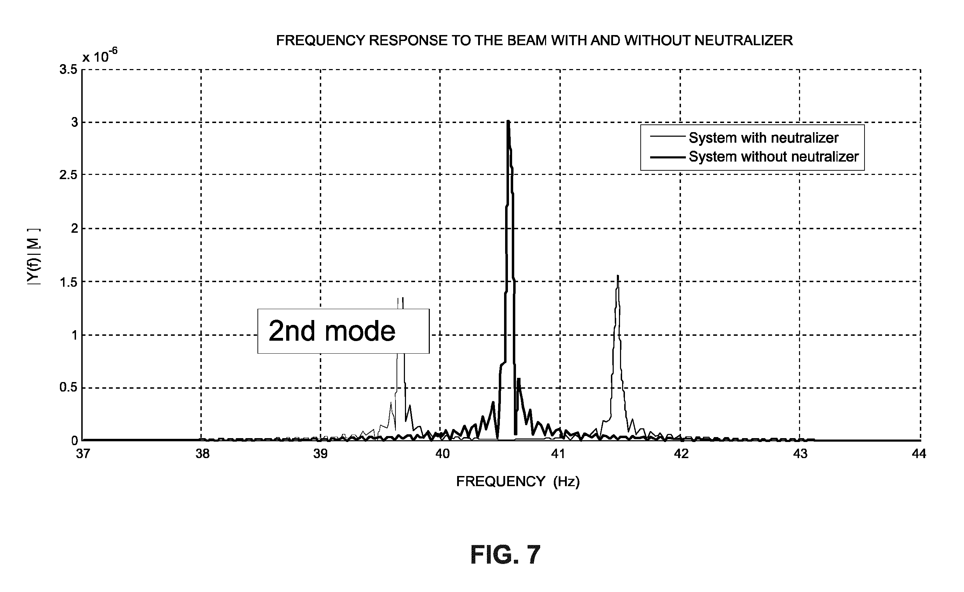

Figure 7 shows a graph that illustrates a comparison of the frequencies of operation with and without the use of the device, object of the present invention, acting on a beam prototype to validate the efficiency of the neutralizer; and

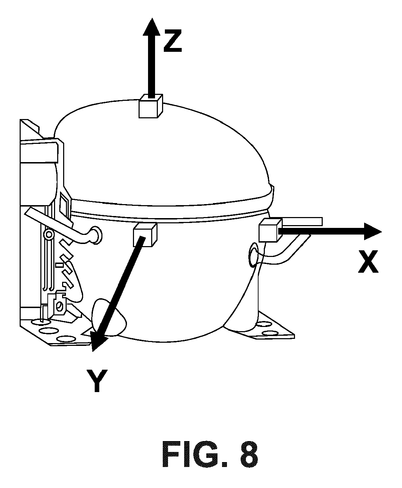

Figure 8 schematically shows the orthogonal axes in which it may be observed the performance of the neutralizer device, object of the present invention.

### Detailed Description of the Invention

The object of the present invention will be described and explained in more detail based on the accompanying drawings, which have merely exemplary and non-limiting character, since variations and modifications may be made without departing from the scope of the claimed protection.

Initially it is worth noting that, since the natural frequency of the object is directly related to its mass and stiffness, it is known that the mass increase is capable of reducing such frequency, while its stiffness increase is able to raise it. Therefore, the object of the present invention aims to change the natural frequency of the compressor assembly + 1 solution as a means to reduce resonance and thereby promoting a significant reduction in noise levels and vibrations during operation. Therefore, the benefits and advantages of the object of the present invention resides in the fact of promoting the change of dampening conditions and, moreover, promoting ways to efficiently adjust the frequency of the operation of the equipment.

Thus, the tuned vibration neutralizer device, according to a preferred embodiment of the present invention, comprises the use of elastomeric material components that, when installed in a specific rod-shaped structure, are effective to reduce the main frequencies sources of noise in the refrigeration compressors.

The proposed solution is based on the implementation of a dual mass-spring system, while the second system vibrates due to the primary source of vibrations, thus avoiding the vibrational energy of those specific frequencies, produced by the compressor 1,is transferred to the product, since the tuned vibration neutralizer device acts as an "absorber" thereof.

Briefly, the tuned vibration neutralizer device, object of the present invention, basically comprises one rod 2 which engages the outer region of the compressor housing 1 and a single substantially cylindrical body 3, constituted by an elastomeric material 31 coated with a rigid layer 32.In the preferred embodiment of the invention, said rigid layer 32 is made of metal, however it should be noted that it can be of any material having higher stiffness than that of the elastomeric material 31.

It should be clarified that the body 3 functions, *per se,* as a mass-spring subsystem, in which the rigid layer 32 functions as a mass and the elastomeric material functions as a spring 31. However, when considering the neutralizer device as a whole - that is, the macro system - the body 3 (consisting of the rigid layer 32 and the elastomeric material 31) functions as a mass, in which case the rod 2 functions as a spring. It is noted, therefore, that during the operation of the device, the macro system absorbs vibrations coming from the compressor and additional and cumulative subsystem absorbs the vibrations of the macro system, allowing only to neutralize the vibrations at a frequency range, i.e. the tuning frequency generated by the operation of the equipment.

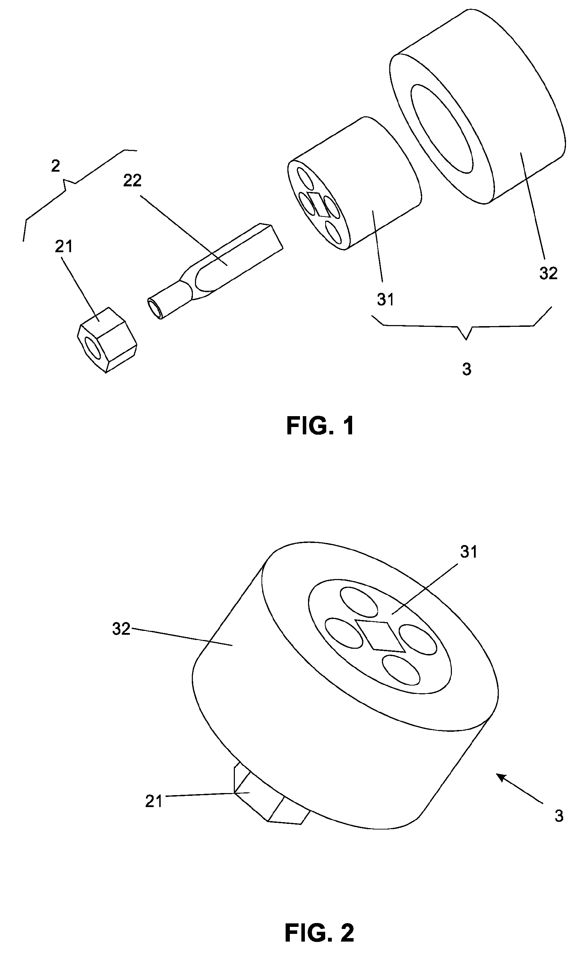

In the preferred embodiment illustrated in the accompanying Figures 1 and 2, said rod comprising a second fastening means 21 which may be, for example, a screw, fastened to a shaft 22, wherein said fastening means 21, in addition to helping the fastening of the device to the compressor housing1, it also allows to preserve the time of operation and to adjust its frequency of operation.

It is also important to note that the use of a neutralizer device defined by a rigid ring 32, surrounding an elastomeric material 31 (viscous elastic material),is due to the capacity of absorbing the vibration from the mass-spring system formed by the metal and the elastomeric material works, thus, 150 times higher than the conventional.

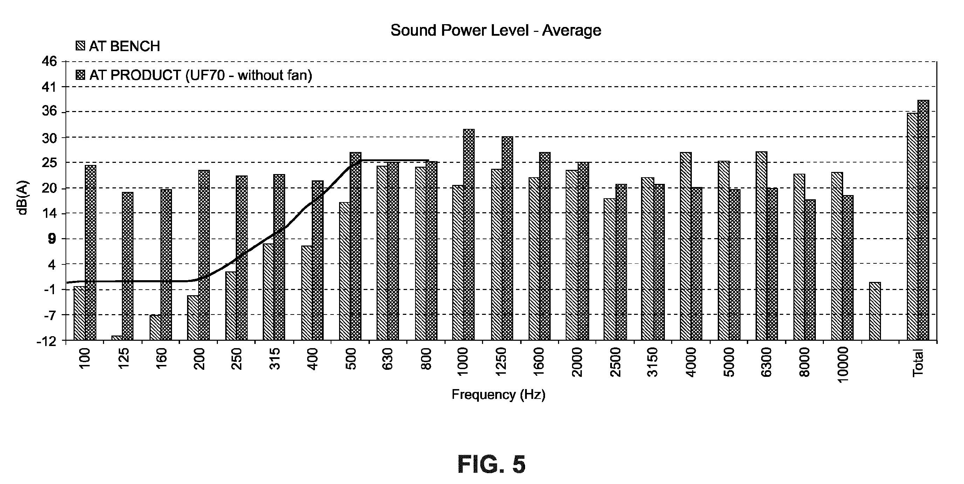

It should be noted that the timing adjustment depends on the dimensions of the rod 2 and the mass of the rigid ring 32; however, the effectiveness of the neutralizer device of the present invention requires that the rigid ring layer 32 has a mass ranging from 5 to 10% of the mass of the vibrating body - in the case illustrated in the accompanying drawings, the compressor 1. The graph in Figure 5 enables viewing, in a very clear manner, the frequency response of a compressor 1 which operates with the neutralizer device of the present invention in comparison with the values inherent to the operation of an apparatus which does not use said device.

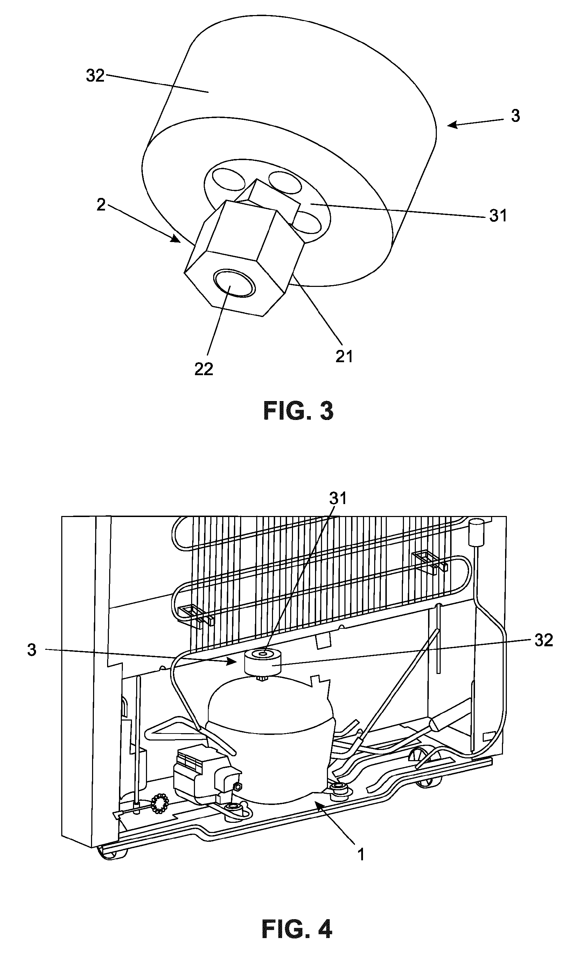

This graph shows that the introduction of an additional neutralizer device, having the characteristics listed above, reduces the vibration amplitude of certain frequencies (in this case, 50, 100 and 150 Hertz, a compressor with a voltage power supply at 230 V / 50 Hz, which are the frequencies with higher vibrational amplitude, as illustrated in the graph of Figure 4) by creating a new vibration mode - rather than a single high amplitude peak, it shall have two peaks of significantly lower vibration intensities, which reduces, in a very substantial manner, the vibration and noise levels from the operation of the compression system.

It is important to mention that, conventionally, the noise reduction in compressors 1 - which are rotating machines with high pressure and low rotation that generate high noise at low frequencies - is made by means of reactive silencers at the inlet and outlet of the equipment, by vibration isolators in the mounting of the compressor 1on the floor of the installation, by employing flexible joints in the pipes, and by enclosing the compressor housing 1.However, such solutions (widely known by the current state of the art) lack of practicality and versatility, in addition to having limitations in the observed reduction levels. Some alternative solutions, already described earlier in this specification, also described solutions based on the mass increase of the products to obtain different conditions of vibration that, however, are limited to damping the vibration to preset frequencies.

The neutralizer vibration device of the present invention additionally takes into account the vibrational changes achieved by changing the stiffness of the compressor, through the implementation of one rod 2 that holds the operating time while providing an immediate adjustment of the device vibration frequency combining, therefore, the change in the vibrations pattern resulting from the change of mass with the changes of stiffness to achieve the expected results. Then it includes a practical and simple construction/installation solution, which is further subject to be used with devices that are already in use.

It should also be noted that the above description is for the sole purpose of describing, in an exemplary manner, some preferred embodiments of the present invention. Therefore, it is clear that a person skilled in the art understands that many modifications, variations and constructive combinations of the elements, performing the same function substantially in the same way to achieve the same results, are still within the protection scope defined by the appended claims.

## Claims

1. Tuned vibration neutralizer device designed, more specifically, for use in compressors (1) for refrigeration systems, wherein the operation of said device is based on mass-spring system to neutralize vibration **CHARACTERIZED in that** it comprises:
- at least one rod (2) cooperating with the compressor (1), wherein said rod (2) comprises at least one fastening means (21) and at least one shaft (22) cooperating with at least one fastening means (21);
- at least one body (3) cooperating with the at least one rod (2), wherein the at least one body (3) comprises an elastomeric material (31) having stiffness and damping properties present in three orthogonal axes (x; y and z), coated with at least one rigid layer (32);
wherein the tuned vibration neutralizer device comprises means to act as a dual mass-spring system, since the rigid layer (32) functions as a mass-spring system with respect to the elastomeric material (31) and the at least one body (3) comprising a rigid layer (32) and the elastomeric material (31) functions as a mass-spring system with respect to the rod (2) and, hence, the compressor (1).

2. Device according to claim 1, **CHARACTERIZED in that** the rigid layer (32) comprises a material having higher stiffness than that of the elastomeric material (31).

3. Device according to claims 1 and 2, **characterized in that** the rigid layer (32) is made of metallic material.

4. Device according to claim 1, **CHARACTERIZED in that** the mass of the at least one rigid layer (32) comprises from 2 to 20% of the mass of the compressor (1).

5. Device according to claims 1 and 2, **CHARACTERIZED in that** the mass of the at least one rigid layer (32) comprises, more specifically, from 5 to 10% of the mass of the compressor (1).

6. Device according to claim 1, **CHARACTERIZED in that** the at least one rod (2) cooperates with the upper central surface of the compressor (1).

7. Device according to claim 1, **CHARACTERIZED in that** the at least one fastening means (21) performs the adjustment of the rod (2) operation time.

8. Device according to claim 1, **CHARACTERIZED in that** the at least one fastening means (21) performs the operating frequency adjustment of the tuned vibration neutralizer device.

9. Device according to claim 1, **CHARACTERIZED in that** to reduce the vibration amplitude at frequencies of 50/60 Hz, and harmonics thereof.
